(19) Europäisches Patentamt
European Patent Office
Office européen des brevets

(11) **EP 3 751 163 B1**

(12) **EUROPÄISCHE PATENTSCHRIFT**

(45) Veröffentlichungstag und Bekanntmachung des Hinweises auf die Patenterteilung:
**21.02.2024 Patentblatt 2024/08**

(21) Anmeldenummer: **20179240.5**

(22) Anmeldetag: **10.06.2020**

(51) Internationale Patentklassifikation (IPC):
**F16D 3/26** *(2006.01)*

(52) Gemeinsame Patentklassifikation (CPC):
**F16D 3/26; F16D 3/40;** F16D 2300/18

(54) **GELENKWELLE**

ARTICULATED SHAFT

ARBRE ARTICULÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.06.2019 DE 102019208713**

(43) Veröffentlichungstag der Anmeldung:
**16.12.2020 Patentblatt 2020/51**

(73) Patentinhaber: **Off-Highway Powertrain Services Germany GmbH**
**53797 Lohmar (DE)**

(72) Erfinder:
• **Kisla, Timur Mehmet**
**53844 Troisdorf (DE)**
• **Krüger, Max**
**53797 Lohmar (DE)**

(74) Vertreter: **Grünecker Patent- und Rechtsanwälte PartG mbB**
**Leopoldstraße 4**
**80802 München (DE)**

(56) Entgegenhaltungen:
EP-A1- 0 338 095    CN-A- 106 050 957
US-A- 3 545 265    US-A- 4 838 077
US-A1- 2014 188 353

**Beschreibung**

Die vorliegende Erfindung liegt auf dem Gebiet der Antriebstechnik.

Bei der Übertragung eines Drehmoments in einem geknickten Wellenstrang kommen Gelenkwellen zum Einsatz. Mitunter sind diese Gelenkwellen mit einem zusätzlichen Längenausgleich versehen, welcher auch als Schiebestück bezeichnet wird.

Solche Gelenkwellen, die mit der vorliegenden Erfindung verbessert werden sollen, kommen auch zwischen Traktoren und davon gezogenen, geschobenen oder getragenen landwirtschaftlichen Arbeitsmaschinen zum Einsatz. Zwischen dem Traktor und der Arbeitsmaschine wird in der Regel eine Gelenkwelle mit zwei Kreuzgelenken und einer dazwischenliegenden, mehrteiligen Welle, die ein Wellenrohr sowie Segmente für den Längenausgleich verwirklicht, eingesetzt, um die Drehmoment-Übertragung davon unabhängig zu machen, welche Bewegung die Arbeitsmaschinen relativ zu dem Traktor bzw. der Zugmaschine ausführt.

In der US 4 838 077 A, US 3 545 265 A und US 2014/188353 A1 werden gattungsgemäße Gelenkwellen beschrieben.

Der vorliegenden Erfindung geht es insbesondere um die Verbesserung solcher Gelenkwellen. Gemäß der vorliegenden Erfindung wird vorgeschlagen, die Gelenkwelle mit einem Generator zu versehen. Dieser Generator erzeugt Strom, üblicherweise für die Stromversorgung der Gelenkwelle selbst. Denn diese ist nicht nur ein Element zur Übertragung eines Drehmomentes; die Gelenkwelle kann vielmehr mit zumindest einem Sensor versehen sein, der das Verhalten der Gelenkwelle erfasst. Dieser Sensor kann ein Temperatursensor, ein Dehnungsmessstreifen, ein Beschleunigungs- oder ein Lagesensor sein, der die thermische, dynamische oder mechanische Beanspruchung der Gelenkwelle überwacht. Solche Sensoren eignen sich für die frühe Erkennung von sich anbahnendem Verschleiß.

Der Generator ist erfindungsgemäß verdrehfest innerhalb eines der Wellenkörper der Gelenkwelle angeordnet, die an einem Zapfenkreuz der Gelenkwelle angeschlossen sind. Das Zapfenkreuz einer Gelenkwelle hat üblicherweise vier Zapfen, die jeweils rechtwinklig zueinander üblicherweise in einer Ebene angeordnet sind. An sich gegenüberliegenden Zapfen ist jeweils ein Wellenkörper verdrehfest, jedoch gelenkig verbunden. Dadurch besteht die Möglichkeit, zwischen den beiden Wellenkörpem ein Drehmoment zu übertragen und gleichzeitig eine gewisse winkelige Lage der beiden Wellenkörper relativ zueinander zuzulassen. Nach der zuvor diskutierten Ausgestaltung hat der den Generator aufnehmende Wellenkörper ein Rohrstück oder ist als Rohr ausgebildet. Innerhalb dieses Rohres ist regelmäßig konzentrisch zu der Mittellängsachse des Rohrstücks der Generator vorgesehen. Dieser Generator hat beispielsweise eine Welle, die über einen Ausleger eine Masse trägt. Die Masse sollte möglichst weit von der Mittellängsachse der Welle entfernt angeordnet sein. Aus Gründen einer einfachen Montage hat der Generator üblicherweise ein Gehäuse, welches die Welle trägt und die Masse in sich aufnimmt. Das Gehäuse hat Befestigungselemente zur Anordnung des Generators in dem Wellenkörper. Das Gehäuse hat üblicherweise Lager zur drehbaren Lagerung der Welle, die verdrehfest mit dem Ausleger und der Masse verbunden ist. Diese Komponenten des Generators werden nachfolgend auch als Rotationsgenerator bezeichnet.

An einem freien Ende der Welle des Rotationsgenerators ist ein Wechselstromgenerator angeschlossen, der die Drehenergie bzw. -bewegung und/oder die Drehschwingung der Welle in elektrische Energie umwandelt. Der Wechselstromgenerator kann in an sich bekannter Weise aufgebaut sein. Er kann darüber hinaus mit einer Halteplatte versehen sein, über welche der Wechselstromgenerator für sich in dem Wellenkörper befestigt und verdrehfest mit diesem vorgesehen werden kann. So sind sowohl der Rotationsgenerator wie auch der Wechselstromgenerator fest mit dem Wellenkörper verbunden. Allein die Masse ist in der Lage, relativ zu der Drehbewegung des Wellenkörpers zu drehen. Sie folgt hierbei dem Schwerfeld der Erde. Dadurch wird das Drehmoment erzeugt, welches in dem Wechselstromgenerator in einen Wechselstrom umgewandelt wird.

Dieser Wechselstrom kann genutzt werden, um eine Sendeeinrichtung zu bestromen, die an der Gelenkwelle vorgesehen ist und über welche Signale an eine in der Umgebung der Gelenkwelle vorgesehene Empfangseinrichtung abgesandt werden. Bei diesen Signalen kann es sich um das Messsignal eines Sensors handeln, der mit der Gelenkwelle verbunden ist, bevorzugt an dem Zapfenkreuz angeordnet ist. Die Sendeeinrichtung kann auch ein Auswertesignal einer Logik drahtlos übermitteln, die erfindungsgemäß im Bereich des Generators vorgesehen ist. Wenngleich zuvor auf den Rotationsgenerator und den Wechselstromgenerator mit ihren jeweiligen Komponenten abgestellt wurde, wird der Begriff "Generator" im Sinne der vorliegenden Erfindung als Einheit aus beiden Komponenten verstanden. Der Generator nach der vorliegenden Erfindung nutzt die Rotation zumindest eines Wellenkörpers der Gelenkwelle, um durch eine Relativbewegung, üblicherweise aufgrund der drehbar und exzentrisch zu der Welle gelagerten Masse, ein Drehmoment zu erzeugen, den Wechselstromgenerator zur Erzeugung von Wechselstrom antreibt.

Wie zuvor erwähnt kann der Generator einen Sensor bestromen, der Teil der Gelenkwelle ist. Darüber hinaus kann der Generator eine Logik bestromen, die entweder mit dem Sensor verbunden ist oder auch datenmäßig mit dem Generator, speziell dem Wechselstromgenerator gekoppelt ist, um die elektrische Leistung des Generators auszuwerten. Dabei kann beispielsweise durch Abgleich zwischen dem Wert der elektrischen Leistung und einer Auswertetabelle festgestellt werden, mit welcher Drehzahl die Gelenkwelle betrieben wird. Dabei kann ungeachtet der speziellen Ausprägung des Generators die erzeugte Energie, in Form von Amplitude und Frequenz, des Generators zur Analyse der Drehbewegung der Gelenkwelle genutzt werden. Auch kann durch Analyse der elektrischen Leistung das Betriebsverhalten der Gelenkwelle analysiert werden. Dabei kann ein planmäßiges Betriebsverhalten analysiert werden, um beispielsweise die Drehzahl oder den Beugewinkel der Gelenkwelle zu ermitteln. Ebenso gut können Störungen im Betriebsverhalten analysiert werden, wie beispielsweise eine Fehlausrichtung oder ein Fehlbetrieb der Gelenkwelle. Auch ist es möglich, die von dem Generator erzeugte Energie zu nutzen, um auf den Kardanfehler zu schließen und hierbei auf einen ungleichmäßigen Beugewinkel an beiden Enden der Gelenkwelle, um damit eine Fehlausrichtung dieser Enden festzustellen.

Die Logik wird dazu genutzt, um den Kardanfehler der Gelenkwelle bzw. die Winkellage zwischen den beiden Wellenkörpern auszuwerten und/oder sich abzeichnende Funktionsstörungen der Gelenkwelle zu ermitteln.

Die Erfindung ist nicht auf einen Generator gemäß obiger Gestaltung beschränkt. Jede Art von Generator ist zur Verwirklichung der vorliegenden Erfindung möglich. Generatoren, die aus einer Drehbewegung einer Welle, beispielsweise einer Fahrzeugwelle, elektrische Leistung gewinnen, sind allgemein bekannt. Verwiesen wird auf EP 2 175 547 A2. Der Generator nach der vorliegenden Erfindung ist aber ein solcher Generator, der für sich und allein durch Anordnung in der Gelenkwelle funktionsfähig ist. Dies bedeutet, dass keine Funktionselemente des Generators vorgesehen sind, die nicht zusammen mit der Gelenkwelle verwirklicht sind und/oder nicht zusammen mit der Gelenkwelle drehen, wenn diese im Betrieb ist. Bevorzugt speist der Generator eine Sendeeinrichtung mit Strom, die das von dem Sensor erzeugte Messsignal drahtlos an eine extern vorgesehene Logik übermittelt oder aber ein von der Logik aufgrund des Sensorsignals erzeugtes Auswertesignal an einen Empfänger versendet. So erlaubt die Sendeeinrichtung das drahtlose Übermitteln des Messsignals oder des analysierten Messsignals zur Weiterverarbeitung des entsprechenden Signals. Das übermittelte Signal kann außerhalb der eigentlichen Gelenkwelle beispielsweise an einem Steuer- oder Bedienstand einer die Gelenkwelle aufweisenden Vorrichtung, beispielsweise einem landwirtschaftlichen Zugfahrzeug, angezeigt werden. Damit ist es möglich, eine fehlerhafte Einstellung der Gelenkwelle zu analysieren und ggf. zu korrigieren. Ungleiche Beugewinkel an beiden Enden der Gelenkwelle, die zu einer übermäßigen Beanspruchung der Gelenkwelle im Betrieb führen können, können durch Anpassung der Lage der beiden, an beiden Enden der Gelenkwelle vorgesehenen Antriebselemente korrigiert werden. So kann beispielsweise ein über die Gelenkwelle angetriebenes landwirtschaftliches Gerät im Hinblick auf ein schonendes Betriebsverhalten der Gelenkwelle optimiert relativ zu dem landwirtschaftlichen Zugfahrzeug, dessen Zapfwelle mit der Gelenkwelle verbunden sein kann, ausgerichtet werden. Aber auch andere Verwendungen sind denkbar. So kann bei einem stationären Betrieb das Messsignal oder das Auswertesignal einen sich anbahnenden Verschleiß der Gelenkwelle signalisieren und damit notwendige Wartungsarbeiten anzeigen.

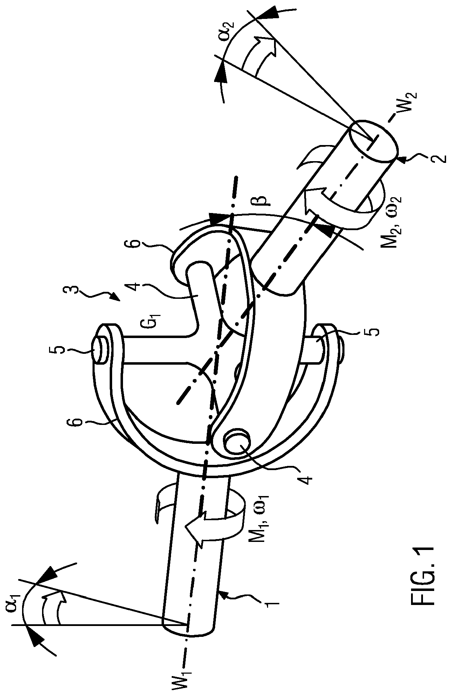

Die Auswertung der elektrischen Leistung des Generators zur Ermittlung der Winkellage zwischen den Wellenkörpern wird nachstehend näher erläutert. Dabei wird von einem Generator mit vier Polpaaren und drei Phasen ausgegangen. Die nachfolgende Beschreibung bezieht sich dabei insbesondere auf Figur 1, die schematisch ein konventionelles Kardangelenk und dessen wesentliche Teile zeigt. Dabei steht Bezugszeichen 1 für einen ersten Wellenkörper, der als Antriebswelle anzusehen ist und Bezugszeichen 2 für einen zweiten Wellenkörper, der als Abtriebswelle zu verstehen ist. Zwischen den beiden Wellen 1, 2 befindet sich ein Zapfenkreuz 3, das einander gegenüberliegende Zapfen 4, 5 aufweist, die jeweils über Gabeln 6 mit den entsprechenden Wellen 1, 2 verbunden sind.

$\alpha_1$ bzw. $\alpha_2$ sei der Drehwinkel der jeweiligen Wellen 1, 2. $\beta$ sei der Beugewinkel zwischen den beiden Wellen 1, 2. Der Winkel $\beta$ gibt dementsprechend die Winkellage der beiden Wellen 1, 2 an.

In der Zeichnung sind mit $M_1$ und $M_2$ die Drehmomente der jeweiligen Wellen 1,2 indiziert. Entsprechendes gilt für die Winkelgeschwindigkeiten $\omega_1$, $\omega_2$.

Das Geschwindigkeitsverhältnis zwischen den beiden Wellenteilen ergibt sich aus:

$$\frac{\omega_2}{\omega_1} = \frac{\cos\beta}{1-sin^2\beta\cdot sin^2\alpha_1} \quad (1)$$

Dieses Geschwindigkeitsverhältnis wirkt sich auf die induzierte Generatorspannung aus. Die sinusförmige Spannung des Generators wird durch eine weitere Frequenz überlagert, die Rückschlüsse auf den Beugewinkel $\beta$ ermöglicht.

Für die Auswertung der Leistung des Generators sind die unterschiedlichen Frequenzen zu analysieren. Für die Auswertung in der Logik werden bevorzugt die Generatorspannung und der Kardanfehler in Betracht gezogen. Folgende Signale sind von Bedeutung:

*Generatorspannung:*

$$A_{Generator}(t) = 1 \cdot sin(2\pi \cdot 4 \cdot 5Hz \cdot t) \qquad (2)$$

*Kardanfehler[24]:*

$$f_{Kardanfehler}(t) = 1 - 0,1 \cdot \sin(2\pi \cdot 2 \cdot 5Hz \cdot t) \qquad (3)$$

(1) . (2) :

$$A_{Modulaxen}(t) = (1 \cdot sin(2\pi \cdot 4 \cdot 5Hz \cdot t)) \cdot (1 - 0,1 \cdot \sin(2\pi \cdot 2 \cdot 5Hz \cdot t)) \qquad (4)$$

Dabei wurde für die Darstellung des Kardanfehlers eine vereinfachte Formel unter Berücksichtigung (2)*(3) einer Kleinwinkelannäherung verwandt. Das korrekte Geschwindigkeitsverhältnis wurde zuvor unter (1) vorgestellt.

Für die Modulation werden die Generatorspannung und der Kardanfehler miteinander multipliziert; Formel (4).

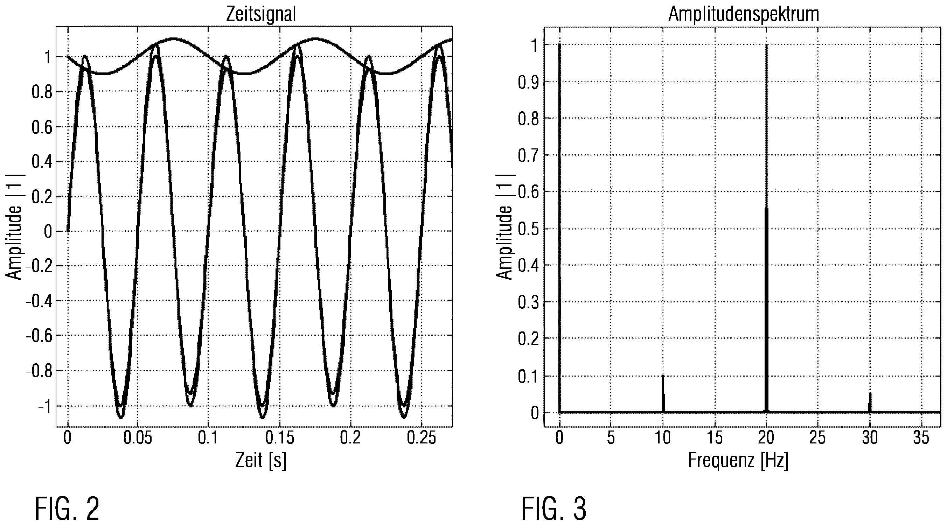

Die Generatorspannung und der Kardanfehler sind in Figur 2 mit durchgezogener Linie eingezeichnet. Die Modulation ist darübergelegt und soweit möglich in strichpunktierter Linie wiedergegeben. Die Figur 2 gibt dabei einen idealisierten Verlauf der Spannungsamplitude des Generators wieder. Das Amplitudenspektrum wird in Figur 3 verdeutlicht. Es dominiert die Signalfrequenz des Generators von 20 Hz, bedingt durch eine entsprechende Drehung der Gelenkwelle, die mit einer Drehfrequenz von 5 Hz dreht. Der Kardanfehler tritt mit doppelter Drehfrequenz auf, also von 10 Hz.

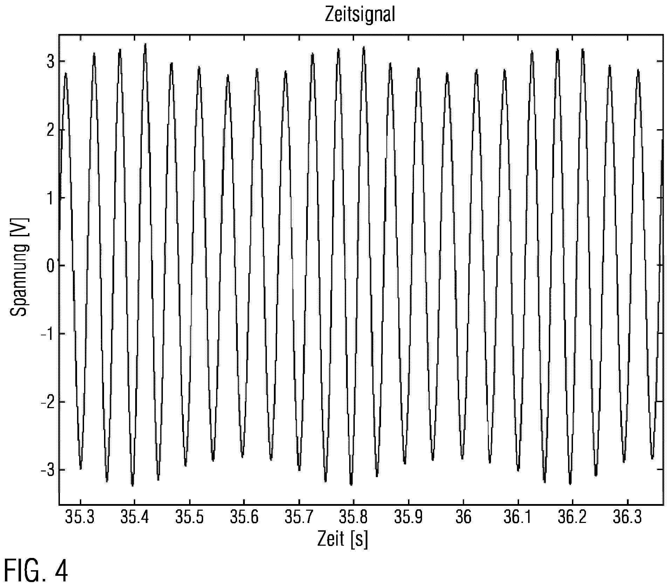

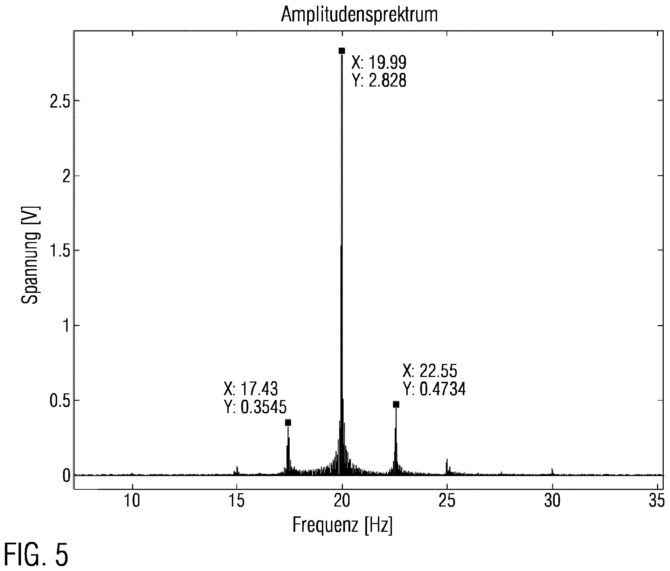

Die Figur 4 zeigt die Wechselspannung bei einer Drehfrequenz der Gelenkwelle von 5 Hz bei einem Beugewinkel β von 15°. Das in Figur 4 gezeigte Messsignal ist durch den Kardanfehler überlagert, was sich in unterschiedlichen Amplituden der Generatorspannung in Abhängigkeit von der Zeit deutlich zeigt. Das mittels FFT-ermittelte Amplitudenspektrum ist in Figur 5 verdeutlicht. Auch hier ergibt sich wieder aufgrund der Drehung der Gelenkwelle und der vier Pole eine dominierende Signalfrequenz von 20 Hz mit ausgeprägten und den Kardanfehler wiedergebenden Seitenbändern von +/- 2,5 Hz bei etwa 17,5 Hz und 22,5 Hz.

Der Generator erzeugt eine Amplitude und eine Frequenz, die genutzt werden können, um die Drehzahl und den Kardanfehler (der sich durch die Beugewinkel, einer Fehlausrichtung oder einem Fehlbetrieb der Gelenkwelle ergibt) zu bewerten.

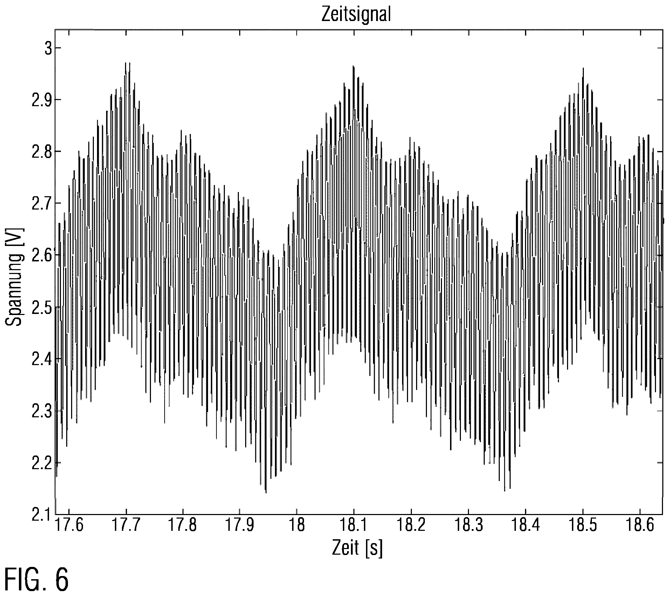

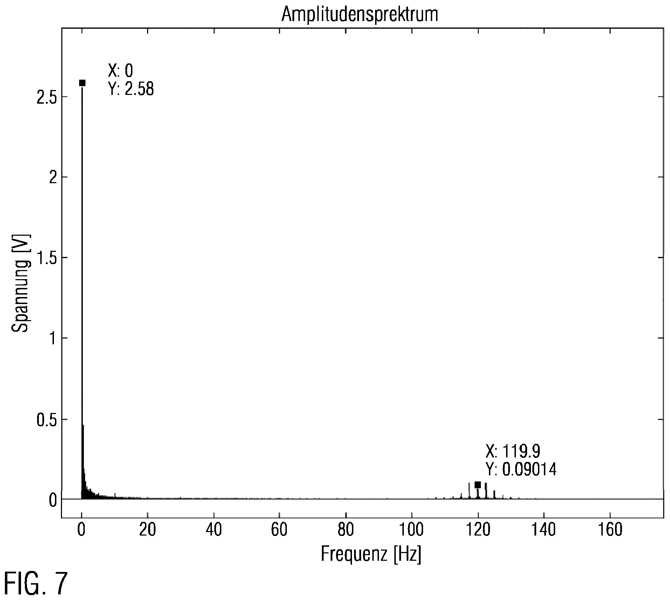

Zur Vervollständigung der Darstellung wird anhand der Figuren 6 und 7 die Auswirkung des Kardanfehlers nach Gleichrichtung der Wechselspannung verdeutlicht. Figur 6 zeigt dabei das gleichgerichtete Zeitsignal bei einer Drehfrequenz von 5 Hz und einem Beugewinkel von 15°. Bei einer gleichmäßigen Drehbewegung wäre eine symmetrische Wechselspannung zu erwarten. Die Verfälschung der Symmetrie aufgrund des Kardaneffekts wird in Figur 6 deutlich.

Für die Analyse des Amplitudenspektrums gemäß Figur 6 wurde - wie zuvor - ein zeitlicher Ausschnitt von 20 Sekunden bei gleichen Messparametern isoliert betrachtet. Das sich hierbei ergebende Amplitudenspektrum wird in Figur 7 verdeutlicht.

Bei 0 Hz zeigt sich die dominierende Amplitude entsprechend dem Gleichspannungsanteil aus dem Spannungssignal gemäß Figur 6. Zusätzlich zeigt sich bei einer Frequenz von 120 Hz eine geringe Restschwingung bedingt durch den überlagerten Kardaneffekt. Die Frequenz von 120 Hz ergibt sich dabei durch die Drehfrequenz von 5 Hz, der Polzahl 4 und den drei Phasen sowie der Gleichrichtung, die mit dem Faktor 2 zu Buche schlägt.

Es ist ohne Weiteres vorstellbar, dass mit dieser Frequenzanalyse der Leistung des Generators, speziell der von dem Generator erzeugten Spannung nicht durch nur der Beugewinkel, sondern auch sich abzeichnende weitere Abweichungen von dem idealisierten Verhalten einer Welle, insbesondere einer Gelenkwelle ermittelt werden können. So lässt sich ein Verschleiß und/oder ein sich anbahnendes Versagen bzw. ein Fehlverhalten der Welle unmittelbar durch Analyse der Leistung des Generators feststellen.

Die erfindungsgemäße Lösung bietet auch die Möglichkeit, durch Frequenzanalyse des Generatorsignals einen ungleichmäßigen Beugewinkel an beiden Enden der Gelenkwelle festzustellen. In der Praxis hat eine Gelenkwelle üblicherweise zwei Enden, die üblicherweise jeweils über ein Zapfenkreuz mit einem mittleren Wellenkörper verbunden sind. Diese Enden werden beispielsweise bei der Benutzung in der Landwirtschaft zwischen dem landwirtschaftlichen Zugfahrzeug und dem landwirtschaftlichen Gerät zur Vermittlung eines Antriebsmomentes verbaut. Ungleichmäßige Beugewinkel an diesen beiden Enden gegenüber dem mittleren Wellenkörper lassen sich durch Frequenzanalyse ermitteln. Dabei wird ein Seitenband im Amplitudenspektrum genutzt, um auf ungleichmäßige Beugewinkel an beiden Enden der Gelenkwelle zu schließen. Die Analyse kann als Regelgröße zur Veränderung der Lage der Gelenkwelle zwischen dem landwirtschaftlichen Zugfahrzeug und dem landwirtschaftlichen Arbeitsgerät genutzt werden, um die detektierte Fehlstellung zu beheben.

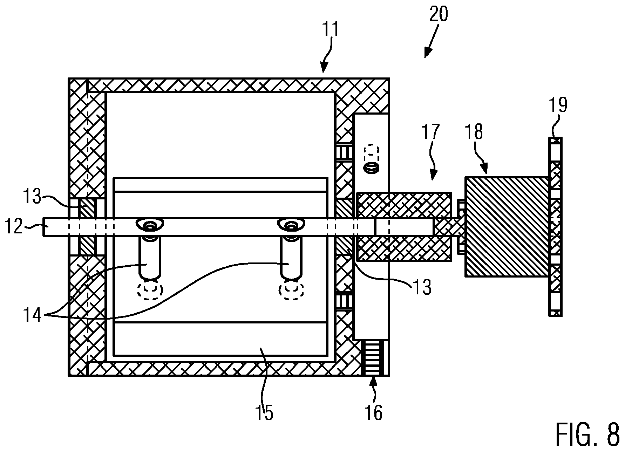

Die Figur 8 zeigt ein Ausführungsbeispiel eines Generators der vorliegenden Erfindung in einer Längsschnittansicht.

In einem Gehäuse 10 ist eine Welle 12 über Lager 13 drehbar gelagert. Die Welle 12 trägt über Ausleger 14 eine ringsegmentförmig ausgebildete Masse 15.

Das Gehäuse 10 hat sich zum Außenumfang des ansonsten rotationssymmetrisch ausgebildeten Gehäuses 10 öffnende Gewindebohrungen 16, in die Madenschrauben eingesetzt werden können, um das Gehäuse 10 in ein Wellenrohr einzusetzen und verdrehfest damit zu verbinden. Die Welle 12 überragt beidseitig das Gehäuse 10. Ein freies Ende der Welle 12 ist mit einer Kupplung 17 verbunden, die eine Eingangswelle eines Wechselstromgenerators 18 mit der Welle 12 des Rotationsgenerators koppelt. Dadurch wird das Drehmoment der Masse 15 auf den Wechselstromgenerator 18 übertragen. Endseitig an dem Wechselstromgenerator 18 ist ein Befestigungsflansch 19 vorgesehen. Der hier gezeigte und mit Bezugszeichen 20 versehene Generator ist kann in einen rohrförmigen Wellenkörper verdrehfest eingesetzt. Über den Flansch 19 wird der Wechselstromgenerator 18 gesondert verdrehfest an dem Wellenkörper befestigt.

**Bezugszeichenliste**

| | |
|---|---|
| 1 | erster Wellenkörper |
| 2 | zweiter Wellenkörper |
| 3 | Zapfenkreuz |
| 4 | Zapfen |
| 5 | Zapfen |
| 6 | Gabeln |
| 10 | Gehäuse |
| 12 | Welle |
| 13 | Lager |
| 14 | Ausleger |
| 15 | Masse |
| 16 | Gewindebohrungen |
| 17 | Kupplung |
| 18 | Wechselstromgenerator |
| 19 | Flansch |
| 20 | Generator |
| $\alpha_1$ | Drehwinkel |
| $\alpha_2$ | Drehwinkel |
| $\beta$ | Beugewinkel |
| $M_1$ | Drehmoment |
| $M_2$ | Drehmoment |
| $\omega_1$ | Winkelgeschwindigkeit |
| $\omega_2$ | Winkelgeschwindigkeit |

**Patentansprüche**

1. Gelenkwelle mit zumindest einem Zapfenkreuz (3), an dessen gegenüberliegenden Zapfen (4, 5) jeweils ein Wellenkörper (1, 2) angeschlossen ist, und mit einem Generator (20) zur Stromerzeugung, wobei der Generator (20) verdrehfest in einem der Wellenkörper (1, 2) angeordnet ist, **dadurch gekennzeichnet, dass** die Gelenkwelle eine Logik aufweist, die die elektrische Leistung des Generators (20) auswertet und die von dem Generator (20) erzeugte Spannung zur Bestimmung des Kardanfehlers auswertet.

2. Gelenkwelle nach Anspruch 1, **gekennzeichnet durch** einen von dem Generator (20) bestromten und mit der Gelenkwelle, bevorzugt dem Zapfenkreuz (3) verbundenen Sensor.

3. Gelenkwelle nach Anspruch 1 oder 2, **dadurch gekennzeichnet, dass** die Logik die von dem Generator (20) erzeugte Spannung zur Bestimmung der Winkellage zwischen den beiden Wellenkörpern (1, 2) auswertet.

4. Gelenkwelle nach einem der vorherigen Ansprüche, **dadurch gekennzeichnet, dass** die Logik die elektrische Leistung des Generators (20) zur Erkennung von Funktionsstörungen der Gelenkwelle und/oder des Generators (20) auswertet.

5.  Gelenkwelle nach einem der vorherigen Ansprüche, **dadurch gekennzeichnet, dass** die Logik die elektrische Leistung des Generators (20) zur Bestimmung des Betriebsverhaltens der Gelenkwelle, insbesondere der Bestimmung der Drehzahl auswertet.

6.  Gelenkwelle nach einem der vorherigen Ansprüche, **dadurch gekennzeichnet, dass** der Generator (20) eine Sendeeinrichtung bestromt.

7.  Gelenkwelle nach Anspruch 6, **dadurch gekennzeichnet, dass** die Sendeeinrichtung ein Messsignal eines mit der Gelenkwelle verbundenen Sensors an eine externe Logik und/oder ein von der Logik nach Anspruch 1 erzeugtes Auswertesignal sendet.

**Claims**

1.  Joint shaft with at least one cross pin (3), on each of the oppositely disposed pins (4, 5) of which a shaft member (1, 2) is attached, and with a generator (20) for producing electric energy, wherein the generator (20) is arranged in one of said shaft members (1, 2) in a rotationally fixed manner, **characterized in that** said joint shaft comprises a logic, which evaluates the electrical output of said generator (20) and which evaluates the voltage generated by said generator (20) in order to determine the cardan effect.

2.  Joint shaft according to claim 1, **characterized by** a sensor energized by said generator (20) and attached to said joint shaft, preferably to said cross pin (3).

3.  Joint shaft according to claim 1 or 2, **characterized in that** said logic evaluates the voltage generated by said generator (20) in order to determine the angular position between said two shaft members (1, 2).

4.  Joint shaft according to one of the preceding claims, **characterized in that** said logic evaluates the electrical output of said generator (20) in order to detect malfunctions of said joint shaft and/or of said generator (20).

5.  Joint shaft according to one of the preceding claims, **characterized in that** said logic evaluates the electrical output of said generator (20) in order to determine the operating behavior of the turning shaft, in particular to determine the rotational speed.

6.  Joint shaft according to one of the preceding claims, **characterized in that** said generator (20) energizes a transmitter.

7.  Joint shaft according to claim 6, **characterized in that** said transmitter sends a measuring signal of a sensor connected to said joint shaft to an external logic and/or an evaluation signal generated by said logic according to claim 1.

**Revendications**

1.  Arbre de transmission comprenant au moins un croisillon de cardan (3), au niveau des dés (4, 5) opposés duquel est respectivement raccordé un corps d'arbre (1, 2), et un générateur (20) permettant de produire de l'électricité, dans lequel

    le générateur (20) est agencé fixe en rotation dans un des corps d'arbre (1, 2),
    **caractérisé en ce que**
    l'arbre de transmission présente un circuit logique qui évalue la puissance électrique du générateur (20) et évalue la tension générée par le générateur (20) afin de déterminer l'erreur de cardan.

2.  Arbre de transmission selon la revendication 1, **caractérisé par** un capteur alimenté par le générateur (20) et relié à l'arbre de transmission, de manière préférée au croisillon de cardan (3).

3.  Arbre de transmission selon la revendication 1 ou 2, **caractérisé en ce que** le circuit logique évalue la tension générée par le générateur (20) afin de déterminer la position angulaire entre les deux corps d'arbre (1, 2).

4. Arbre de transmission selon l'une quelconque des revendications précédentes, **caractérisé en ce que** le circuit logique évalue la puissance électrique du générateur (20) afin de détecter des défauts de fonctionnement de l'arbre de transmission et/ou du générateur (20).

5. Arbre de transmission selon l'une quelconque des revendications précédentes, **caractérisé en ce que** le circuit logique évalue la puissance électrique du générateur (20) afin de déterminer le comportement de fonctionnement de l'arbre de transmission, en particulier afin de déterminer la vitesse de rotation.

6. Arbre de transmission selon l'une quelconque des revendications précédentes, **caractérisé en ce que** le générateur (20) alimente en énergie un dispositif émetteur.

7. Arbre de transmission selon la revendication 6, **caractérisé en ce que** le dispositif émetteur envoie à un circuit logique externe un signal de mesure d'un capteur relié à l'arbre de transmission et/ou un signal d'évaluation généré par le circuit logique selon la revendication 1.

FIG. 1

FIG. 2

FIG. 3

FIG. 4

FIG. 5

FIG. 6

FIG. 7

FIG. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4838077 A
- US 3545265 A
- US 2014188353 A1
- EP 2175547 A2